# EUROPEAN PATENT SPECIFICATION

(11) **EP 2 492 132 B1**
(45) Date of publication and mention of the grant of the patent: **11.07.2018**
(21) Application number: 12154437.3
(22) Date of filing: 08.02.2012
(51) Int. Cl.: B60L 11/00, B60L 7/10, B60L 9/22

(54) **Drive device for railway vehicle**
Antriebsvorrichtung für ein Eisenbahnfahrzeug
Dispositif de commande pour véhicule ferroviaire

(30) Priority: 22.02.2011 JP 2011035300
(43) Date of publication of application: 29.08.2012
(73) Proprietor: Hitachi, Ltd., Tokyo 100-8280 (JP)
(72) Inventor: Araki, Daijiro, Chiyoda-ku Tokyo 100-8220 (JP); Toyota, Eiichi, Chiyoda-ku Tokyo 100-8220 (JP)
(74) Representative: Gill, Stephen Charles

(56) References cited:
- EP-A1- 2 578 436
- JP-A- 2001 069 604
- JP-A- 2002 369 304
- JP-A- 2006 094 613
- JP-A- 2009 183 078

## Description

### BACKGROUND OF THE INVENTION

### Field of the Invention

The present invention relates to a drive device for a vehicle with a storage element mounted therein, and specifically relates to a drive device for a railway vehicle, the drive device being capable of providing a function that expands a speed range in which a regenerative brake operates.

### Description of the Related Art

In the field of railway vehicles, regenerative brake control in which at the time of braking, a main motor is made to operate as a power generator to obtain a braking force, and simultaneously, motional energy of the vehicle is converted into electrical energy and returned to an overhead wire has widely been used. The power returned to the overhead wire by means of the regenerative brake control can be used as power to make another vehicle run with power, enabling power consumption reduction.

However, the regenerative brake control has a problem in that regeneration performance is limited in a high speed range (at a constant torque terminal velocity or higher) depending on the performance of the main motor and/or the inverter device, disabling provision of a sufficient braking force.

A technique for solving this problem is disclosed in, for example, Japanese Patent Laid-Open Publication No. 2008-278615 (Patent Document 1). The drive device for a railway vehicle described in Japanese Patent Laid-Open Publication No. 2008-278615 (Patent Document 1) includes a motor, an inverter device that drives the motor, a chargeable/dischargeable storage element, and a voltage converter (chopper device) for the storage element. The storage element is connected in series to the inverter device, and a voltage generated by the voltage converter is added to a direct-current power supply voltage (overhead wire voltage) and applied to the inverter device. Consequently, the voltage applied to the motor is increased, enabling an increase in output of the motor, and thus, the regenerative braking force can be increased in a high speed range without an increase in current of the motor (hereinafter referred to as "high speed-range electric braking function").

However, in the case of the aforementioned conventional technique, power corresponding to the product of a terminal voltage of the storage element and a current flowing in the storage element is charged in the storage element. In this case, a regenerative current (overhead wire current) Iₛ flows in the storage element, and thus, large power corresponding to the product of the terminal voltage Vb and the regenerative current Iₛ, i.e., Vb × Iₛ, is charged in the storage element. Accordingly, there is a problem in that a storage element having a relatively large capacitance such as a lithium-ion battery is required as the storage element, resulting in an increase in cost of the system.

An object of the present invention is to provide means for increasing a direct-current input voltage of an inverter device, which is essential to provide a high speed-range electric braking function, without using a large-capacitance storage element such as a lithium-ion battery, thereby reducing the cost of the system.

2006 094613 A, JP 2001 069604 A, JP 2002 369304 A and JP 2002 183078 A propose respective regenerative power storage systems. EP 2578436 A1 also proposes a regenerative power storage system, and is prior art for novelty only under EPC Article 54(3).

### SUMMARY OF THE INVENTION

The present invention provides a drive device for a railway vehicle according to claim 1. In other words, the charge/discharge device (e.g., a chopper device) that discharges the capacitor is provided to form a path of a current (chopper current) flowing in a direction in which the capacitor is discharged by the charge/discharge device, in addition to a path of a current (regenerative current) flowing in a direction in which the capacitor is charged by a high speed-range electric braking function.

According to embodiments of the present invention, provision of a path of a current (chopper current) flowing in a direction in which a capacitor is discharged by a charge/discharge device, in addition to a path of a current (regenerative current) flowing in a direction in which the capacitor is charged by a high speed-range electric braking function enables provision of a high speed-range electric braking function using a small-capacitance capacitor, without using a large-capacitance storage element such as lithium-ion battery as in the conventional technique, whereby the cost of the system can be reduced.

Furthermore, as a result of an amount of current discharged from the capacitor being adjusted by the charge/discharge device, a terminal voltage of the capacitor can be controlled, enabling variable control of a direct-current input voltage of the inverter device.

### BRIEF DESCRIPTION OF THE DRAWINGS

Figure 1 is a diagram illustrating a basic configuration of a drive device for a railway vehicle according to the present invention;
Figure 2 is a diagram illustrating a basic configuration of a first embodiment of the drive device for a railway vehicle according to the present invention;
Figure 3 is a diagram illustrating a basic operation of the first embodiment of the drive device for a railway vehicle according to the present invention (when a charge/discharge device does not operate);
Figure 4 is a diagram illustrating a basic operation of the first embodiment of the drive device for a railway vehicle according to the present invention (when the charge/discharge device operates and a switching element 8 is on);
Figure 5 is a diagram illustrating temporal waveforms of a current flowing in the switching element 8 and a regenerative current in the basic operation of the first embodiment of the drive device for a railway vehicle according to the present invention (when the switching element 8 is on).
Figure 6 is a diagram illustrating a basic operation of the first embodiment of the drive device for a railway vehicle of the present invention (when the charge/discharge device operates and the switching element 8 is off);
Figure 7 is a diagram illustrating temporal waveforms of a current flowing in a diode element 9 and the regenerative current in the basic operation of the first embodiment of the drive device for a railway vehicle according to the present invention (when the switching element 8 is off);
Figure 8 is a diagram illustrating temporal waveforms of a capacitor charging current and a capacitor discharging current in the first embodiment of the drive device for a railway vehicle according to the present invention;
Figure 9 is a diagram illustrating a temporal waveform of a capacitor flow current in the first embodiment of the drive device for a railway vehicle according to the present invention;
Figure 10 is a diagram illustrating a basic configuration of a second embodiment of the drive device for a railway vehicle according to the present invention;
Figure 11 is a diagram illustrating a basic operation of the second embodiment of the drive device for a railway vehicle according to the present invention (when a charge/discharge device does not operate);
Figure 12 is a diagram illustrating a basic operation of the second embodiment of the drive device for a railway vehicle according to the present invention (when the charge/discharge device operates and a switching element 12b is on);
Figure 13 is a diagram illustrating temporal waveforms of a current flowing in the switching element 12b and a regenerative current in the basic operation of the second embodiment of the drive device for a railway vehicle according to the present invention (when the switching element 12b is on);
Figure 14 is a diagram illustrating a basic operation of the second embodiment of the drive device for a railway vehicle of the present invention (when the charge/discharge device operates and the switching element 12b is off); and
Figure 15 is a diagram illustrating temporal waveforms of a current flowing in a diode element 13a and the regenerative current in the basic operation of the second embodiment of the drive device for a railway vehicle according to the present invention (when the switching element 12b is off).

### DETAILED DESCRIPTION OF THE PREFERRED EMBODIMENTS

Embodiments of the present invention will be described below with reference to the drawings.

### [First Embodiment]

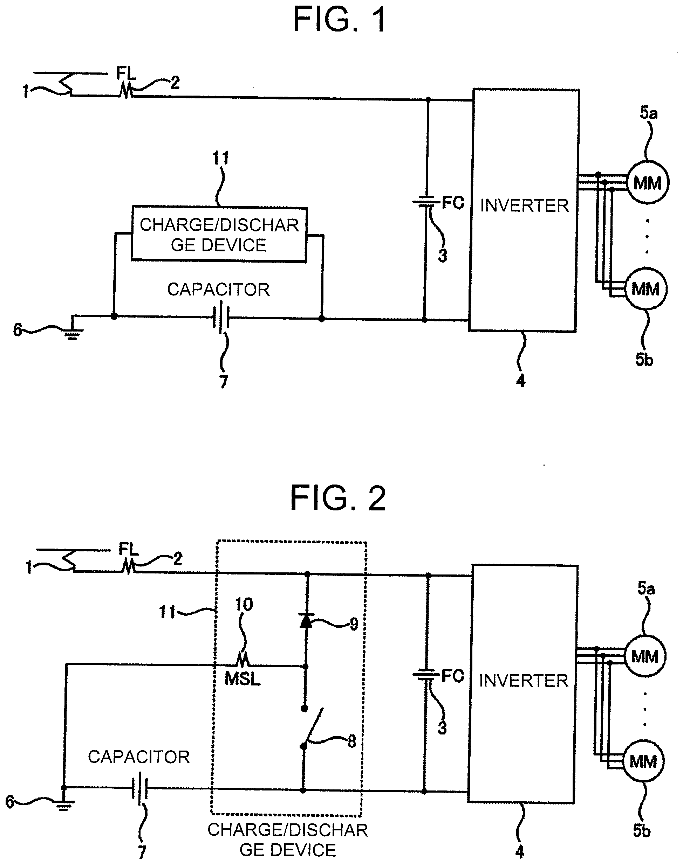

Figure 1 is a diagram illustrating a basic configuration of a drive device for a railway vehicle according to the present invention.

A drive device for a railway vehicle, the drive device including a power collector 1 that obtains direct-current power from a direct-current voltage source such as an electric train power line, an LC circuit (filter circuit) including a filter reactor (FL) 2 and a filter capacitor (FC) 3, an inverter device 4 that converts direct-current power into alternating-current power, at least one alternating-current motor 5a and 5b that is driven by the inverter device 4, a capacitor 7, which is a chargeable/dischargeable storage element, provided on the direct-current power side of the inverter device 4, and a charge/discharge device 11 having a function that charges/discharges the capacitor 7, is illustrated. The capacitor 7 is connected in series to a terminal on the low potential side of the inverter device 4.

Although Figure 1 illustrates a case where the inverter device 4 drives two main motors, in the present invention, the number of main motors that the inverter device 4 drives is not limited.

Figure 2 is a diagram illustrating a basic configuration of a first embodiment of the drive device for a railway vehicle according to the present invention.

The charge/discharge device 11 includes a switching element 8, a diode element 9 and a smoothing reactor (MSL) 10. A circuit in which the switching element 8 and the diode element 9 are connected in series is connected in parallel to the inverter device 4 on the direct-current power side. In other words, the circuit in which the switching element 8 and the diode element 9 are connected in series is inserted between a power line connecting the power collector and the positive side of the inverter device, and a power line connecting the negative side of the inverter device and the negative side of the capacitor. Also, the smoothing reactor (MSL) 10 is arranged at a position part way of a power line connecting a point of connection between the switching element 8 and the diode element 9, and a positive terminal of the capacitor 7. The positive terminal of the capacitor 7 is connected to a grounding point 6, and a negative terminal of the capacitor 7 is connected to a terminal on the low potential side of the inverter device 4.

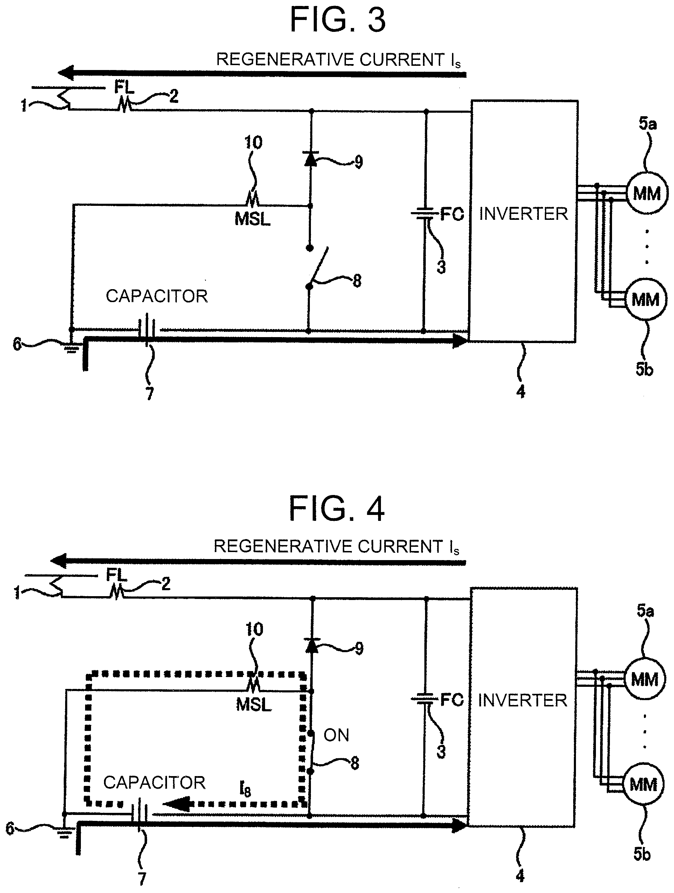

In the embodiment of the present invention, at the time of regeneration, a regenerative current Iₛ flows as illustrated in Figure 3, the capacitor 7 is charged with the regenerative current Iₛ, and a voltage Vc is generated at opposite terminals of the capacitor 7. Here, a voltage of the terminal on the lower potential side of the inverter device 4 is lowered by the amount of the terminal voltage Vc of the capacitor 7 with reference to the grounding point 6. Meanwhile, a potential of a terminal on the high potential side of the inverter device 4 is equal to an overhead wire voltage Vs where the grounding point 6 is regarded as a reference potential. In other words, a difference in potential between the input and output terminals (the positive-side terminal and the negative-side terminal) of the inverter device 4 corresponds to the sum of the terminal voltage Vc of the capacitor 7 and the overhead wire voltage Vs, i.e., Vc+Vs. As described above, the difference in potential between the input and output terminals (the positive-side terminal and the negative-side terminal) of the inverter device 4 is increased by the amount of the terminal voltage Vc of the capacitor 7, enabling a maximum regenerative power to be increased by the amount of (Vc+Vs)/Vs without changing a maximum current flowing the inverter device 4. Also, here, the capacitor 7 is charged with power corresponding to the product of the terminal voltage Vc and the capacitor flow current I_{c}, i.e., Vc × I_{c}.

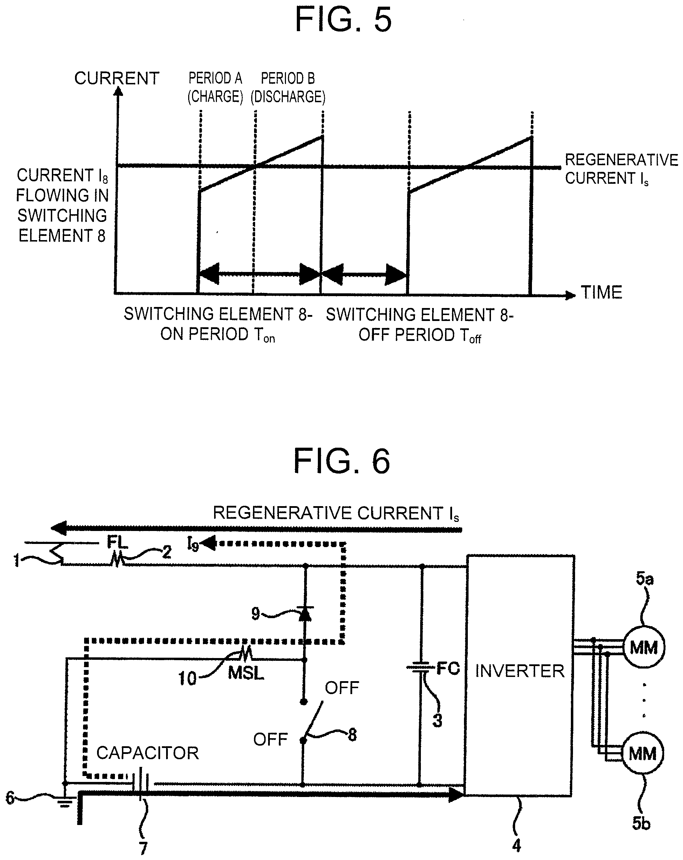

Subsequently, as illustrated in Figures 4 and 6, the switching element 8 is periodically chopped (turned on/off) to make a discharging current (chopper current) flow in the capacitor 7.

More specifically, as illustrated in Figure 4, when the switching element 8 is made to enter an on state for a predetermined period of time Tₒₙ, the positive side and the negative side of the capacitor 7 is short-circuited via the smoothing reactor (MSL) 10. Here, the smoothing reactor (MSL) 10 suppresses a current increase rate thereof within a fixed value, as well as storing electric power energy resulting from time integration of the product of the current flowed during the predetermined period of time Tₒₙ and the terminal voltage of the capacitor 7. Here, a current I₈ flowing in the switching element 8 gradually increases as the smoothing reactor (MSL) 10 stores energy.

Figure 5 is a time chart indicating the current I₈ of the switching element 8 in this case and the regenerative current Iₛ.

From among periods before and after a point of time when the current I₈ flowing in the switching element 8 and the regenerative current Iₛ are balanced, in a period A (period in which the switching element 8 is in an on state and the current I₈ flowing in the switching element 8 is smaller than the regenerative current Iₛ), the current I₈ flowing in the switching element 8 is smaller than the regenerative current Iₛ, and thus, the capacitor 7 is charged. Meanwhile, in a period B (period in which the switching element 8 is in an on state and the current I₈ flowing in the switching element 8 is larger than the regenerative current Iₛ), the current I₈ flowing in the switching element 8 is larger than the regenerative current Iₛ, and thus, the capacitor 7 is discharged.

Subsequently, as illustrated in Figure 6, when the switching element 8 is made to enter in an off state for a predetermined period of time T_{off}, electric power energy stored in the smoothing reactor (MSL) 10 is released to a direct-current power part between the power collector 1 and the inverter device 4 via the diode element 9. Here, a current I₉ flowing in the diode element 9 gradually decreases as the energy stored in the smoothing reactor (MSL) 10 is released.

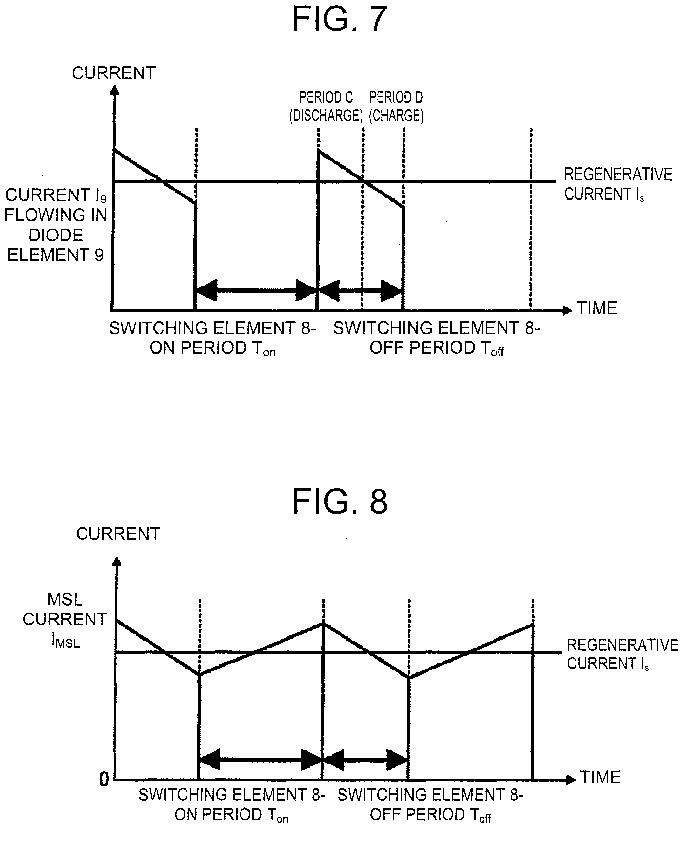

Figure 7 is a time chart indicating the current I₉ flowing in the diode element 9 and the regenerative current Iₛ in this case.

From among periods before and after a point of time when the current I₉ flowing in the diode element 9 and the regenerative current Iₛ are balanced, in a period C (period in which the switching element 8 is in an off state and the current I₉ flowing in the diode element 9 is large then the regenerative current Iₛ), the current I₉ flowing in the diode element 9 is larger than the regenerative current Iₛ, and thus, the capacitor 7 is discharged. Meanwhile, in a period D (period in which the switching element 8 is in an off state and the current I₉ flowing in the diode element 9 is smaller than the regenerative current Iₛ), the current I₉ flowing in the diode element 9 is smaller than the regenerative current Iₛ, and thus, the capacitor 7 is charged.

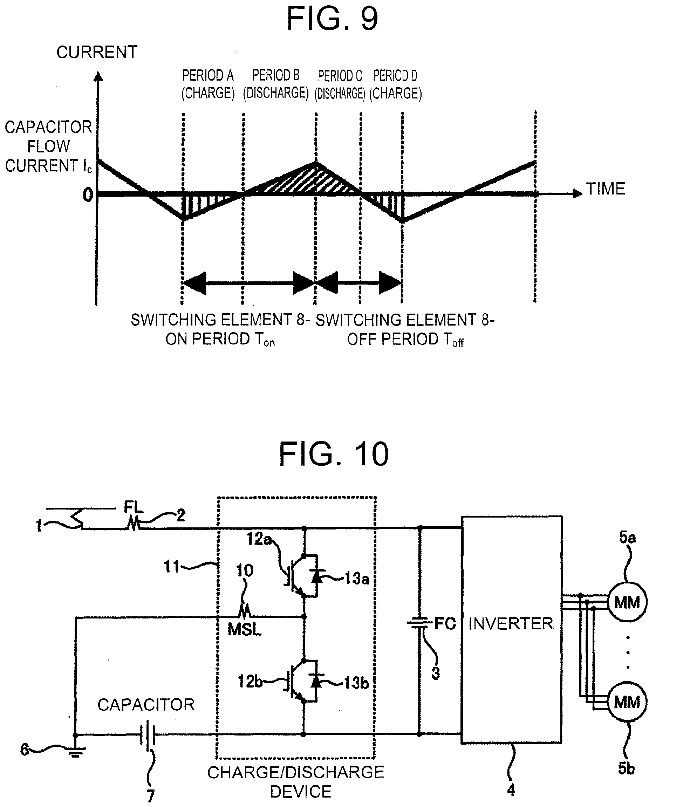

Figure 8 indicates the charging current (regenerative current Iₛ) and the discharging current (chopper current I_{MSL}) for the capacitor 7 when the switching element 8 is turned on/off. Figure 9 indicates a current I_{c} flowing in the capacitor 7. A current corresponding to a difference between the charging current (regenerative current Iₛ) and the discharging current (chopper current I_{MSL}) flows in the capacitor 7, and the capacitor 7 is charged with a value resulting from time integration of the difference between the charging current (regenerative current Iₛ) and the discharging current (chopper current I_{MSL}) as an amount of charge stored therein. Accordingly, it is not necessary that the whole regenerative power be charged in the capacitor 7, and the amount of charge stored in the capacitor 7 is reduced by the amount of the discharging current from the charge/discharge device 11, enabling reduction in capacitance of the capacitor 7. Also, a magnitude of the discharging current for the capacitor 7 is adjusted by chopping of (turning-on/off) of the switching element 8 to control the terminal voltage of (the amount of charge stored in) the capacitor 7, enabling the terminal voltage Vc of the capacitor 7 to be controlled so as to have a desired value. In other words, for increasing the discharging current for the capacitor 7, the chopping is adjusted so as to extend the period in which the switching element 8 is on, and for decreasing the discharging current for the capacitor 7, the chopping is adjusted so as to shorten the period in which the switching element 8 is on.

The embodiment of the present invention enables provision of a high speed-range electric braking function using a capacitor having a small capacitance, without using a storage element having a large capacitance such as a lithium-ion battery, and thus, enables reduction in cost of the system. Furthermore, the discharging current for the capacitor 7 is adjusted by the charge/discharge device 11 to control the terminal voltage of the capacitor 7, enabling variable control of the direct-current input voltage of the inverter device 4. Furthermore, the control of the discharging current for the capacitor 7 may be performed in such a manner that the direct-current input voltage of the inverter device 4 follows a desired value or the terminal voltage of the capacitor 7 follows a desired value.

Although the present embodiment has been described in terms of an example in which a specific configuration of the charge/discharge device includes the switching element 8 and the diode element 9, the diode element 9 may be substituted with any current flow direction control means capable of making a current flow only in a direction from a grounding point of a direct-current voltage source toward the positive side of the direct-current voltage source, and the switching element 8 may be substituted with any current interrupting means capable of making a current flow in a direction from a direct-current voltage source toward a grounding point of the direct-current voltage source and interrupting the current.

### [Second Embodiment]

Figure 10 is a diagram illustrating a basic configuration of a second embodiment of the drive device for a railway vehicle according to the present invention.

Direct-current power supplied from a power collector 1 is subjected to removal of fluctuations in a highfrequency region by means of an LC circuit (filter circuit) including a filter reactor (FL) 2 and a filter capacitor (FC) 3, and then input to an inverter device 4. The inverter device 4 converts the input direct-current power into three-phase alternating-current power having a variable voltage and a variable frequency (VVVF) to drive main motors 5a and 5b. Although a case where the inverter device 4 drives two alternating-current motors is indicated here, in the present invention, the number of main motors that the inverter device 4 drives is not limited. A grounding point 6 determines a reference potential of the circuit.

Switching elements 12a and 12b are current interrupting means each including a semiconductor device. A diode element 13a and a diode element 13b are connected to respective input/output terminals of the switching element 12a and the switching element 12b, respectively, in such a manner that current flow directions of the diode element 13a and a diode element 13b are opposite to those of the switching element 12a and the switching element 12b, respectively. The switching element 12a and the diode element 13a connected in inverse-parallel to each other and the switching element 12b and the diode element 13a connected to inverse-parallel to each other are connected in series to each other, and this serial connection body is connected in parallel to the inverter device. In other words, the switching element 12a and the diode element 13a, and the switching element 12b and the diode element 13a are inserted between a power line connecting the power collector and the positive side of the inverter device, and a power line connecting the negative side of the inverter device and the negative side of the capacitor.

A smoothing reactor (MSL) 10 is arranged at a position part way of a power line connecting a point of connection between the switching elements 12a and 12b and a positive terminal of the capacitor 7. The positive terminal of the capacitor 7 is connected to the grounding point 6, and a negative terminal of the capacitor 7 is connected to a terminal on the low potential side of the inverter device 4.

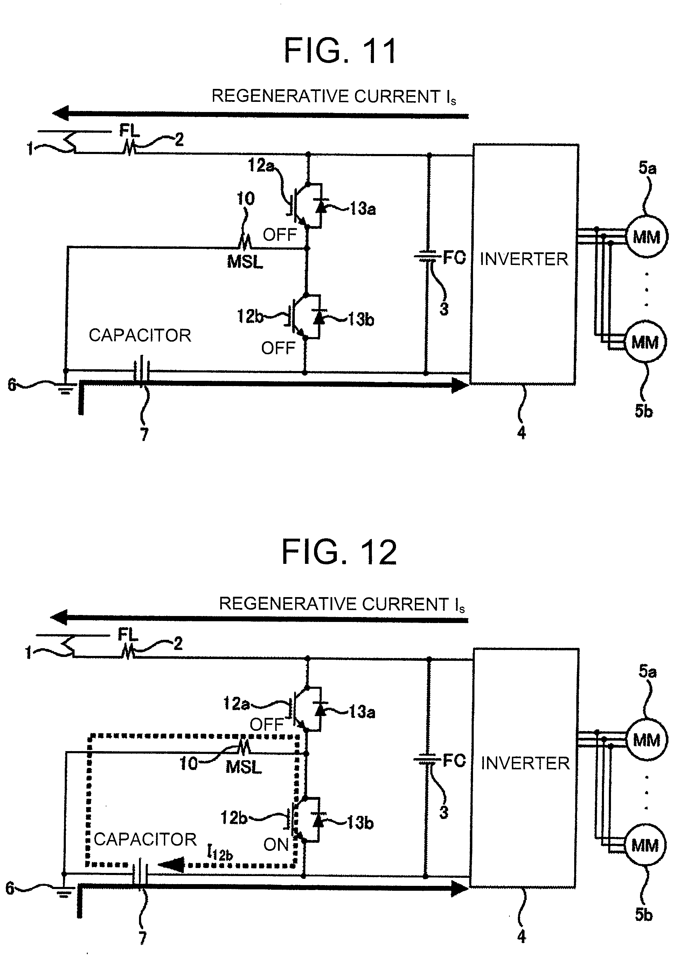

In the embodiment of the present invention, at the time of regeneration, a regenerative current flows as illustrated in Figure 11, the capacitor 7 is charged with the regenerative current, and a voltage Vc is generated at opposite terminals of the capacitor 7. Here, a voltage of the terminal on the lower potential side of the inverter device 4 is lowered by the amount of the terminal voltage Vc of the capacitor 7 with reference to the grounding point 6. Meanwhile, a potential of a terminal on the high-potential side of the inverter device 4 is equal to an overhead wire voltage Vs where the grounding point 6 is regarded as a reference potential. In other words, a difference in potential between the input and output terminals (the positive-side terminal and the negative-side terminal) of the inverter device 4 corresponds to the sum of the terminal voltage Vc of the capacitor 7 and the overhead wire voltage Vs, i.e., Vc+Vs. As described above, the difference in potential between the input and output terminals (the positive-side terminal and the negative-side terminal) of the inverter device 4 is increased by the amount of the terminal voltage Vc of the capacitor 7, enabling maximum regenerative power to be increased by the amount of (Vc+Vs)/Vs without changing a maximum current flowing in the inverter device 4. Also, here, the capacitor 7 is charged with power corresponding to the product of the terminal voltage Vc and the capacitor flow current I_{c} (= overhead wire current Iₛ), i.e., Vc × I_{c}.

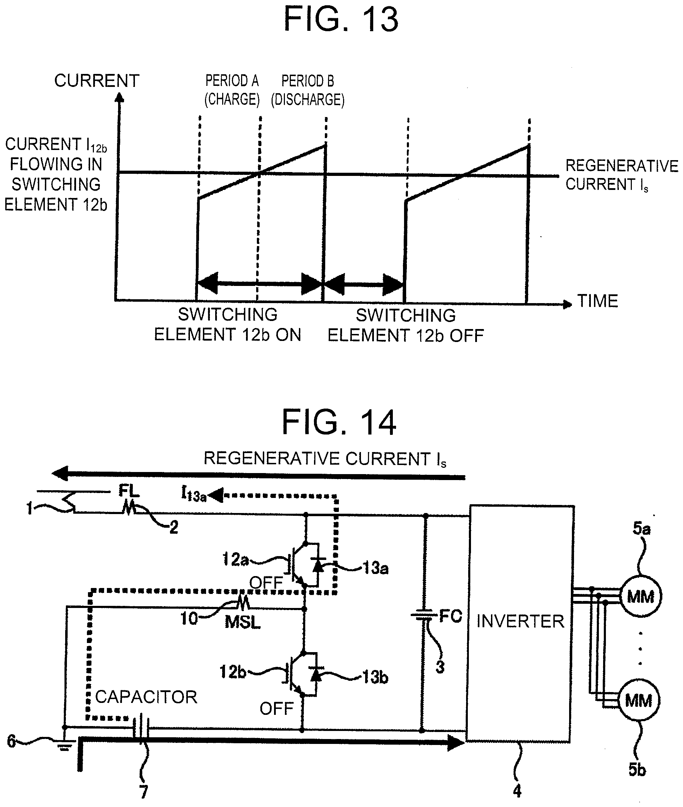

Subsequently, in the embodiment of the present invention, as illustrated in Figures 12 and 14, the switching element 12b is periodically chopped (turned on/off) to make a discharging current (chopper current) flow in the capacitor 7.

More specifically, as illustrated in Figure 12, when the switching element 12a is made to enter an off state and the switching element 12b is made to enter in an on state for a predetermined period of time Tₒₙ, the positive side and the negative side of the capacitor 7 are short-circuited via the smoothing reactor (MSL) 10. Here, the smoothing reactor (MSL) 10 suppresses a current increase rate thereof within a fixed value as well as storing electric power energy resulting from time integration of the product of the current flowed during the period of Tₒₙ and the terminal voltage of the capacitor 7. Here, a current I_{12b} flowing in the switching element 12b gradually increases as the smoothing reactor (MSL) 10 store energy.

Figure 13 is a time chart indicating the current I_{12b} flowing in the switching element 12b in this case and the regenerative current Iₛ.

From among periods before and after a point of time when the current I_{12b} flowing in the switching element 12b and the regenerative current Iₛ are balanced, in a period A (period in which the switching element 12b is in an on state and the current I_{12b} flowing in the switching element 12b is smaller than the regenerative current Iₛ), the current I_{12b} flowing in the switching element 12b is smaller than the regenerative current Iₛ, and thus, the capacitor 7 is charged. Meanwhile, in a period B (period in which the switching element 8b is in an on state and the current I_{12b} flowing in the switching element 12b is larger than the regenerative current Iₛ), the current I_{12b} flowing in the switching element 12b is larger than the regenerative current Iₛ, and the capacitor 7 is discharged.

Subsequently, as illustrated in Figure 14, when the switching element 12b is made to enter an off state for a predetermined period of time T_{off} while the switching element 12a is maintained in an off state, the electric power energy stored in the smoothing reactor (MSL) 10 is released to a direct-current power part between the power collector 1 and the inverter device 4 via the diode element 13a. Here, a current I₁₃ₐ flowing in the diode element 13a gradually decreases as the energy stored in the smoothing reactor (MSL) 10 is released.

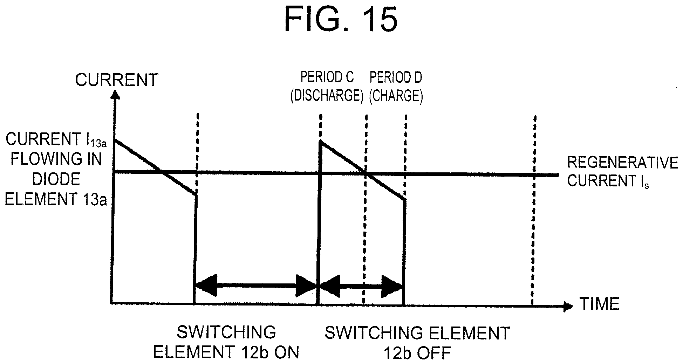

Figure 15 is a time chart indicating the current I₁₃ₐ flowing in the diode element 13a in this case and the regenerative current Iₛ.

From among periods before and after a point of time when the current I₁₃ₐ flowing in the diode element 13a and the regenerative current Iₛ are balanced, in a period C (period in which the switching element 12b is in an off state and the current I₁₃ₐ flowing in the diode element 13a is larger than the regenerative current Iₛ), the current I₁₃ₐ flowing in the diode element 13a is larger than the regenerative current Iₛ, and thus, the capacitor 7 is discharged. Meanwhile, in a period D (period in which the switching element 12b is in an off state and the current I₁₃ₐ flowing in the diode element 13a is smaller than the regenerative current Iₛ), the current I₁₃ₐ flowing in the diode element 13a is smaller than the regenerative current Iₛ, and thus, the capacitor 7 is charged.

A current corresponding to a difference between the charging current (regenerative current Iₛ) and the discharging current (chopper current I_{MSL}) flows in the capacitor 7, and the capacitor 7 is charged with a value resulting from time integration of the difference between charging current (regenerative current Iₛ) and the discharging current (chopper current I_{MSL}) as an amount of charge stored therein. Accordingly, the amount of charge stored in the capacitor 7 is reduced by the amount of the discharging current from the charge/discharge device 11, enabling reduction in capacitance of the capacitor 7. Furthermore, a magnitude of the discharging current for the capacitor 7 is adjusted by chopping (turning-on/off) of the switching element 12b to control the terminal voltage of (the amount of charge stored in) the capacitor 7, enabling the terminal voltage Vc of the capacitor 7 to be controlled so as to have a desired value. In other words, for increasing the discharging current for the capacitor 7, the chopping is adjusted so as to extend the period in which the switching element 8 is on, and for decreasing the discharging current for the capacitor 7, the chopping is adjusted so as to shorten the period in which the switching element 8 is on.

The embodiment of the present invention enables provision of a high speed-range electric braking function using a capacitor having a small capacitance, without using a storage element having a large capacitance such as a lithium-ion battery, and thus enables reduction in cost of the system. Furthermore, the discharging current for the capacitor 7 is adjusted by chopping (turning-on/off) of the switching element 12b to control the terminal voltage of the capacitor 7, enabling variable control of a direct-current input voltage of the inverter device 4. The chopping (turning-on/off) control of the switching element 12b may be performed so that the direct-current input voltage of the inverter device 4 follows a desired value or the terminal voltage of the capacitor 7 follows a desired value.

Although the present embodiment has been described in terms of an example in which a specific configuration of the charge/discharge device includes the switching elements 12a and 12b and the diode elements 13a and 13b, such configuration may be substituted with any configuration in which current interrupting means that includes a semiconductor device, the current interrupting means being capable of making a current flow in a direction from a direct-current voltage source toward a grounding point of the direct-current voltage source and interrupting the current, and current flow direction control means capable of making a current flow only in a direction opposite to the direction in which the current interrupting means makes a current flow, are connected in parallel to each other.

## Claims

1. A drive device for a railway vehicle, wherein:
the drive device comprises:
a power collector (1) that obtains direct-current power from a direct-current voltage source,
an inverter device (4) that converts the direct-current power into alternating-current power,
at least one alternating-current motor (5a, 5b) that is driven by the inverter device,
a chargeable/dischargeable capacitor (7) connected to a direct-current power side of the inverter device wherein a positive terminal of the capacitor (7) is connected to a grounding point (6) and a negative terminal of the capacitor (7) is connected to a terminal on the low potential side of said direct-current power side of the inverter device (4) so that the capacitor is connected in series between said grounding point (6) and the inverter device (4); a charge/discharge device (11) that charges/discharges power to/from the capacitor;
wherein the charge/discharge device includes:
first current control means (9; 12a, 13a) with a side thereof connected to a power line connecting the power collector and a positive side of the inverter device,
second current control means (8; 12b, 13b) inserted between another side of the first current control means and a power line connecting a negative side of the inverter device and a negative side of the capacitor, and
a reactor (10) inserted between a position of connection between the first current control means and the second current control means, and a positive side of the capacitor;
wherein said grounding point (6) is connected between the positive side of the capacitor and the reactor;
when regenerative power is generated by the alternating-current motor, the inverter device (4) and the capacitor (7) are connected in series to charge the capacitor with a regenerative current, thereby making a sum of a terminal voltage of the capacitor and an overhead wire voltage be a direct-current input voltage of the inverter device,
wherein the drive device includes a current path for making the charge/discharge device (11) operate to release a charge stored in the capacitor,
wherein the negative side of the capacitor is connected in series to a terminal on the low potential side of the inverter device, and
wherein the charge/discharge device controls the discharging current for the capacitor, thereby adjusting the terminal voltage of the capacitor to a desired voltage value, by switching between an operation of making a current flow in a path of a current with the second current control means, and an operation of interrupting the path of the current with the second current control means, thus enabling variable control of a direct-current input voltage of the inverter device.

2. The drive device for a railway vehicle according to claim 1, wherein the first current control means includes a current flow direction control means (9, 13a) capable of making a current flow only in a direction from the grounding point (6) of the direct-current voltage source toward a positive side of the direct-current voltage source, and the second current control means includes current interrupting means (8, 12b) capable of making a current flow in a direction from the direct-current voltage source toward the grounding point of the direct-current voltage source and interrupting the current.

3. The drive device for a railway vehicle according to claim 1, wherein the first current control means and the second current control means each include a current interrupting means (12a, 12b) that includes a semiconductor device, the current interrupting means being capable of making a current flow in a direction from the direct-current voltage source toward the grounding point of the direct-current voltage source and interrupting the current, and wherein the first current control means and the second current control means each further include a current flow direction control means (13a, 13b) capable of making a current flow only in a direction opposite to the direction in which the respective current interrupting means makes a current flow, and connected in parallel to the respective current interrupting means.

## Patentansprüche

1. Antriebsvorrichtung für ein Schienenfahrzeug, wobei
die Antriebsvorrichtung Folgendes umfasst:
einen Stromabnehmer (1), der Gleichstromleistung von einer Gleichstromspannungsquelle erhält,
eine Invertervorrichtung (4), die die Gleichstromleistung in eine Wechselstromleistung umwandelt,
zumindest einen Wechselstrommotor (5a, 5b), der durch die Invertervorrichtung angetrieben wird,
einen aufladbaren/entladbaren Kondensator (7), der mit einer Gleichstromleistungsseite der Invertervorrichtung verbunden ist, wobei ein positiver Anschluss des Kondensators (7) mit einem Massepunkt (6) verbunden ist und ein negativer Anschluss des Kondensators (7) mit einem Anschluss auf der Niederspannungsseite der Gleichstromleistungsseite der Invertervorrichtung (4) verbunden ist, so dass der Kondensator in Serie zwischen den Massepunkt (6) und die Invertervorrichtung (4) geschaltet ist;
eine Ladungs-/Entladungsvorrichtung (11), die Ladung in den/vom Kondensator lädt/entlädt;
wobei die Ladungs-/Entladungsvorrichtung Folgendes umfasst:
ein erstes Stromsteuerungsmittel (9; 12a, 13a), dessen eine Seite mit einer Leistungsleitung verbunden ist, die den Stromabnehmer und eine positive Seite der Invertervorrichtung miteinander verbindet,
ein zweites Stromsteuerungsmittel (8, 12b, 13b), das zwischen einer anderen Seite des ersten Stromsteuerungsmittels und einer Leistungsleitung, welche eine negative Seite der Invertervorrichtung und eine negative Seite des Kondensators miteinander verbindet, angeordnet ist, und
eine Reaktanz (10), die zwischen einer Verbindungsposition zwischen dem ersten Stromsteuerungsmittel und dem zweiten Stromsteuerungsmittel und einer positiven Seite des Kondensators angeordnet ist;
wobei der Massepunkt (6) zwischen der positiven Seite des Kondensators und der Reaktanz geschaltet ist; wobei,
wenn Rückspeiseleistung durch den Wechselstrommotor erzeugt wird, die Invertervorrichtung (4) und der Kondensator (7) in Serie geschaltet sind, um den Kondensator mit einem Rückspeisestrom aufzuladen, wodurch die Summe einer Anschlussspannung des Kondensators und einer Oberleitungsspannung zur Gleichstromeingangsspannung der Invertervorrichtung wird, wobei
die Antriebsvorrichtung einen Strompfad umfasst, um die Ladungs-/Entladungsvorrichtung (11) in Betrieb zu versetzen, um eine im Kondensator gespeicherte Ladung freizusetzen, wobei
die negative Seite des Kondensators mit einem Anschluss auf der Niederspannungsseite der Invertervorrichtung in Serie verbunden ist und wobei
die Ladungs-/Entladungsvorrichtung den Entladungsstrom für den Kondensator steuert, wodurch die Anschlussspannung des Kondensators auf einen gewünschten Spannungswert eingestellt wird, indem zwischen einem Vorgang des Fließenlassens eines Stroms auf einem Strompfad durch das zweite Stromsteuerungsmittel und einem Vorgang des Unterbrechens des Strompfads durch das zweite Stromsteuerungsmittel geschaltet wird, wodurch ein variables Steuern einer Gleichstromeingangsspannung der Invertervorrichtung ermöglicht wird.

2. Antriebsvorrichtung für ein Schienenfahrzeug nach Anspruch 1, wobei das erste Stromsteuerungsmittel ein Stromflussrichtungssteuerungsmittel (9, 13a) umfasst, das in der Lage ist, Strom nur in eine Richtung vom Massepunkt (6) der Gleichstromspannungsquelle hin zu einer positiven Seite der Gleichstromspannungsquelle fließen zu lassen, und wobei das zweite Stromsteuerungsmittel ein Stromunterbrechungsmittel (8, 12b) umfasst, das in der Lage ist, Strom in einer Richtung von der Gleichstromspannungsquelle hin zum Massepunkt der Gleichstromspannungsquelle fließen zu lassen und den Strom zu unterbrechen.

3. Antriebsvorrichtung für ein Schienenfahrzeug nach Anspruch 1, wobei das erste Stromsteuerungsmittel und das zweite Stromsteuerungsmittel jeweils ein Stromunterbrechungsmittel (12a, 12b) umfassen, die eine Halbleitervorrichtung umfassen, wobei das Stromunterbrechungsmittel in der Lage ist, Strom in einer Richtung von der Gleichstromspannungsquelle hin zum Massepunkt der Gleichstromspannungsquelle fließen zu lassen und den Strom zu unterbrechen, und wobei das erste Steuerungsmittel und das zweite Stromsteuerungsmittel ferner jeweils ein Stromflussrichtungssteuerungsmittel (13a, 13b) umfassen, das in der Lage ist, Strom nur in eine Richtung entgegengesetzt zu jener Richtung, in die das jeweilige Stromunterbrechungsmittel Strom fließen lässt, fließen zu lassen, und das mit dem jeweiligen Stromunterbrechungsmittel parallelgeschaltet ist.

## Revendications

1. Dispositif d'entraînement pour un véhicule ferroviaire, dans lequel :
le dispositif d'entraînement comprend :
un collecteur de puissance (1) qui obtient une puissance en courant continu à partir d'une source de tension en courant continu,
un dispositif onduleur (4) qui convertit la puissance en courant continu en puissance en courant alternatif,
au moins un moteur à courant alternatif (5a, 5b) qui est entraîné par le dispositif onduleur,
un condensateur chargeable/déchargeable (7) connecté à un côté de puissance en courant continu du dispositif onduleur dans lequel une borne positive du condensateur (7) est connectée à un point de mise à la terre (6) et une borne négative du condensateur (7) est connecté à une borne sur le côté à faible potentiel dudit côté de puissance en courant continu du dispositif onduleur (4) de sorte que le condensateur est connecté en série entre ledit point de mise à la terre (6) et le dispositif onduleur (4) ;
un dispositif de charge/décharge (11) qui charge/décharge de la puissance vers/depuis le condensateur ;
dans lequel le dispositif de charge/décharge comprend :
des premiers moyens de commande de courant (9 ; 12a, 13a) dont un côté est connecté à une ligne de puissance reliant le collecteur de puissance et un côté positif du dispositif onduleur,
des seconds moyens de commande de courant (8 ; 12b, 13b) insérés entre un autre côté des premiers moyens de commande de courant et une ligne de puissance reliant un côté négatif du dispositif onduleur et un côté négatif du condensateur, et
un réacteur (10) inséré entre une position de connexion entre les premiers moyens de commande de courant et les seconds moyens de commande de courant, et un côté positif du condensateur ;
dans lequel ledit point de mise à la terre (6) est connecté entre le côté positif du condensateur et le réacteur ;
lorsque une puissance de régénération est générée par le moteur à courant alternatif, le dispositif onduleur (4) et le condensateur (7) sont connectés en série pour charger le condensateur à l'aide d'un courant de régénération, faisant ainsi qu'une somme d'une tension de borne du condensateur et d'une tension de caténaire devient une tension d'entrée en courant continu du dispositif onduleur,
dans lequel le dispositif d'entraînement comprend un trajet de courant pour amener le dispositif de charge/décharge (11) à fonctionner pour libérer une charge stockée dans le condensateur,
dans lequel le côté négatif du condensateur est connecté en série à une borne sur le côté à faible potentiel du dispositif onduleur, et
dans lequel le dispositif de charge/décharge commande le courant de décharge pour le condensateur, ajustant ainsi la tension de borne du condensateur à une valeur de tension souhaitée, en commutant entre une opération consistant à amener un flux de courant dans un trajet d'un courant à l'aide des seconds moyens de commande de courant, et une opération consistant à interrompre le trajet du courant à l'aide des seconds moyens de commande de courant, permettant ainsi une commande variable d'une tension d'entrée en courant continu du dispositif onduleur.

2. Dispositif d'entraînement pour un véhicule ferroviaire selon la revendication 1, dans lequel les premiers moyens de commande de courant comprennent des moyens de commande de direction de flux de courant (9, 13a) capables de faire circuler un courant uniquement dans une direction allant du point de mise à la terre (6) de la source de tension en courant continu vers un côté positif de la source de tension en courant continu, et les seconds moyens de commande de courant comprennent des moyens d'interruption de courant (8, 12b) capables de faire circuler un courant dans un direction allant de la source de tension en courant continu vers le point de mise à la terre de la source de tension en courant continu et d'interrompre le courant.

3. Dispositif d'entraînement pour un véhicule ferroviaire selon la revendication 1, dans lequel les premiers moyens de commande de courant et les seconds moyens de commande de courant comprennent chacun des moyens d'interruption de courant (12a, 12b) comprenant un dispositif à semi-conducteur, les moyens d'interruption de courant étant capables de faire circuler un courant dans une direction allant de la source de tension en courant continu vers le point de mise à la terre de la source de tension en courant continu et d'interrompre le courant, et dans lequel les premiers moyens de commande de courant et les seconds moyens de commande de courant comprennent en outre chacun des moyens de commande de direction de flux de courant (13a, 13b) capables de faire circuler un courant uniquement dans une direction opposée à la direction dans laquelle les moyens d'interruption de courant respectifs font circuler un courant, et connectés en parallèle aux moyens d'interruption de courant respectifs.
